# EUROPEAN PATENT SPECIFICATION

(11) **EP 1 630 032 B1**
(45) Date of publication and mention of the grant of the patent: **20.01.2010**
(21) Application number: 04020530.4
(22) Date of filing: 30.08.2004
(51) Int. Cl.: B60N 2/20, B60N 2/28, B60R 7/04, B60R 11/00, B60R 11/02

(54) **Vehicle seat**
Fahrzeugsitz
Siège de véhicule

(43) Date of publication of application: 01.03.2006
(73) Proprietor: Ford Global Technologies, LLC, Dearborn, MI 48126 (US)
(72) Inventor: Alexandersson, Peter, 434 97 Kungsbacka (SE); Södling, Urban, 430 93 Hälsö (SE)
(74) Representative: Bergquist, Kjell Gunnar

(56) References cited:
- DE-A- 3 704 972
- DE-A- 19 936 741
- FR-A- 2 698 832
- FR-A- 2 764 563
- US-A- 4 668 010

## Description

### TECHNICAL FIELD:

The present invention relates to a vehicle seat comprising a seat back component having a frame component extending at least partly along the sides of said seat back component (see, for example, US-A-4 668 010, corresponding to the preamble of claim 1).

The present invention also relates to a child seat being arranged for mounting in a detachable manner in such a vehicle seat (see, for example, DE 37 04 972 A1, disclosing a safety child seat that can be positioned generally on the rear side of a seat back component of said vehicle seat by means of fastening means arranged to extend, when mounted, towards the sides of the seat back component according to the preamble of claim 5.

### BACKGROUND ART:

In modern vehicles, for example cars, there is a need for versatile storing and/or attachment arrangements for example for child seats, load carriers and office kits.

A child seat is normally strapped to the front passenger seat by means of attachment straps and also by means of an existing three-point safety belt arranged in said front passenger seat. Sometimes it may be desirable to detach the child seat, for example if the child is sleeping in the seat after a ride in the vehicle, or if the child seat is to be moved and mounted in a rear seat in the vehicle in question. This detaching and attaching is cumbersome and time-consuming, and may for example inflict unnecessary wear on the seat belt.

Regarding other types of equipment, such as load carriers and office kits, these can be stored in either the luggage compartment of the vehicle or rested on one of the seats, i.e. being loose in the vehicle. If stored in the luggage compartment, these items are normally lying loose there, and in the event of a sudden acceleration or deceleration, for example in the event of a collision or a sharp turn at a high speed, this equipment may be thrown at other items in the luggage compartment, or at any of the surfaces which form the walls, roof and floor in the luggage compartment. The other items in the luggage compartment and/or the equipment in question may then be damaged. Also, the equipment in question may attract dirt and oil from other things in the luggage compartment, such as oil cans, lift jacks etc. It is even more conceivable that these items are stored on one of the seats, being loose in the vehicle. In the event of a sudden acceleration or deceleration, for example when a collision occurs, or in the event of a sharp turn at a high speed, this equipment may be thrown at objects in the passenger compartment, or at any of the surfaces forming the walls, windows, roof and floor in the passenger compartment. The other items in the passenger compartment and/or the equipment in question may then be damaged. Even worse, the equipment in question may be thrown at persons travelling in the vehicle, causing injuries.

A safety child seat which is secured to the back of a vehicle seat is disclosed in the above-mentioned patent document DE 3704972 A1. The child seat is secured by means of a safety belt and a second belt which is secured at the seat's head rest holder rods.

The above-mentioned US-A-4668010 discloses a seat with a tray formed with outwardly spaced flanges which are arranged to be received in corresponding grooves of the seat's armrests.

There is thus a need for storing equipment such as child seats, load carriers and office kits in a vehicle in such a way that the equipment is safely attached in the vehicle at the same time as it is easily detachable and attachable.

### DISCLOSURE OF INVENTION:

It is an object of the present invention to solve the above-mentioned problems and to provide means for storing equipment such as child seats, load carriers and office kits in a vehicle in such a way that the equipment is safely attached in the vehicle at the same time as it is easily detachable and attachable.

This object is solved by a vehicle seat according to the preamble of claim 1 as initially mentioned, which is characterized in that the tracks are arranged to absorb energy when the ribs slide in the tracks.

This object is further solved by a child seat according to the preamble of claim 5 as initially mentioned, characterized in that said fastening means are adapted for cooperating with tracks arranged along each side of said seat back component and in that said fastening means are constituted by at least one fastening rib being used for mounting of said child seat and being adapted to cooperate with each of said tracks, whereby the tracks are arranged to absorb energy when the fastening means slide in the tracks.

A number of advantages can be obtained by means of the present invention. In particular, a versatile means for storing and securing equipment in a vehicle is provided due to the tracks on the vehicle seat back component. Also, the invention can be used for easy detaching an attaching of the equipment in question. For example, a child seat may be detachably fastened to the seat back in a simple, yet comfortable and secure manner. Furthermore, when the equipment is in the form of a child seat, a collision force dampening function can be provided due to the fact that said tracks can be arranged with energy-absorbing means which allows the child seat to slide along the tracks in a manner so that energy is simultaneously absorbed.

Additional features of the invention are disclosed in the dependent claims

### BRIEF DESCRIPTION OF DRAWINGS:

The invention will now be described more in detail with reference to the attached drawings, wherein:
- Fig. 1: shows a vehicle seat according to the present invention;
- Fig. 2: shows a vehicle seat according to the present invention with a child seat attached to the seat back, in a first position;
- Fig. 3: shows a vehicle seat according to the present invention with a child seat attached to the seat back, in a second position; and
- Figs.4a-c: show the manner in which the invention can be used for mounting a child seat.

### PREFERRED EMBODIMENT:

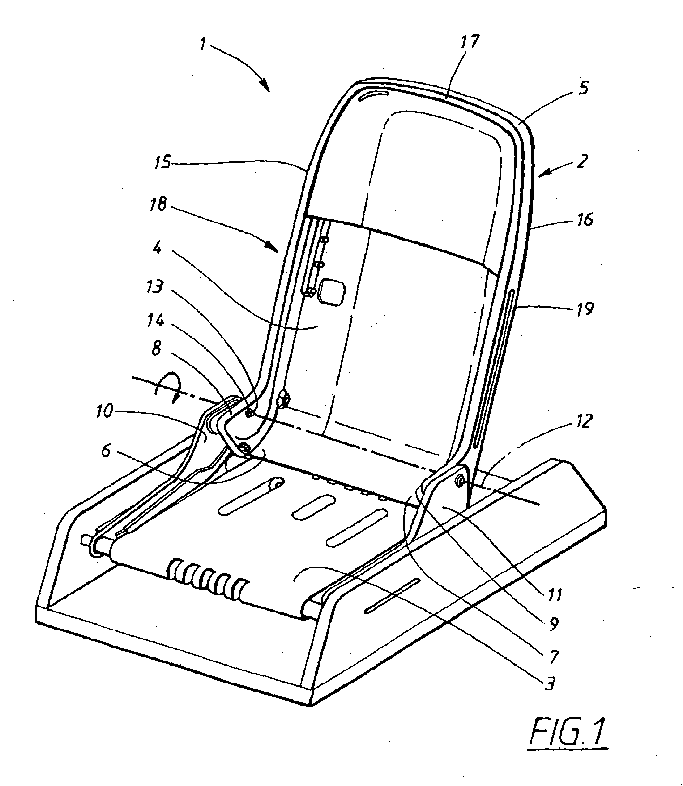

With reference to Figure 1, the basic structure of a vehicle seat 1 in accordance with a preferred embodiment of the invention is shown. In Fig. 1, no upholstery or support components of the vehicle seat 1 are shown. The vehicle seat 1 comprises generally a seat back component 2 and a seat bottom component 3.

The seat back component 2 has a seat back body plate 4 which is generally formed in a manner so as to fit comfortably to the back of an occupant sitting in the seat 1. Along the sides of the seat back body plate 4, a frame component in the form of a stabilizer 5 is arranged. The stabilizer 5 is generally shaped with an inverted U-shaped configuration, more precisely in the form of a a peripheral frame that extends from a first bottom corner 6 of the seat back body plate 4 to a second bottom corner 7 of the seat back body plate 4, thus having a first end portion 8 and a second end portion 9.

The seat bottom component 3 is formed with first side bracket 10 and a second side bracket 11. The first side bracket 10 is positioned next to the above-mentioned first end portion 8, whereas the second side bracket 11 is positioned next to the second end portion 9. Furthermore, the seat back 2 is arranged so as to be foldable, or pivotable, about an axis 12 which extends generally perpendicularly with respect to the longitudinal direction of the vehicle in question. According to the embodiment, the folding of the seat back 2 can be obtained by means of a short pin or shaft 13 in the first side bracket 11 which cooperates with a corresponding hole 14 in the first end portion 8, and a by means of a further pin or shaft (not visible in Fig. 1) in the second side bracket 12 which cooperates with a corresponding hole (not visible in Fig. 1) in the second end portion 9.

The stabilizer 5 has three shanks, i.e. a first shank 15, a second shank 16 and a third shank 17, where each shank 15, 16, 17 runs along a side in the U-shaped configuration. The first shank 15 and the second shank 16 are at least partly essentially parallel to each other, and the third shank 17 is at least partly essentially perpendicular to the first shank 15 and the second shank 16 shank, and joins the first shank 15 and the second shank 16. The shanks 15, 16, 17 are preferably, as evident from Figure 1, made in one piece, forming the stabilizer 5.

At the first shank 15 and the second shank 16, respectively, two tracks 18, 19 are provided, more precisely in the form of a first guide track 18 and a second guide track 19. Each guide track 18, 19 is preferably in the form of a groove which is arranged in a recessed manner at a surface of the respective shank 15, 16 that faces away from the seat back body plate 3. This means that the guide tracks 18, 19 are provided on the outside of each shank 15, 16 and consequently face each longitudinal side of the vehicle in question. However, alternatively (and not shown in the drawings), the guide tracks can in principle also be arranged along the shanks 15, 16 so that they face the forward or rearward direction of the vehicle. Each guide track 18, 19 extends along the main direction of the stabilizer 5, i.e. along the generally vertical extension of the corresponding shanks 15, 16.

It should be noted that the first guide track 18 is obscured in Figure 1, but is similar to the second guide track 19, both in appearance and position.

The guide tracks 18, 19 are of sufficient length for the purposes to be described below. Preferably, they extend along a length that approximately corresponds to half the height of the seat back component 2, starting at a certain distance from the respective end 8, 9 of the stabilizer 5. However, it should be noted that the invention is not limited to any particular length of the guide tracks 18, 19.

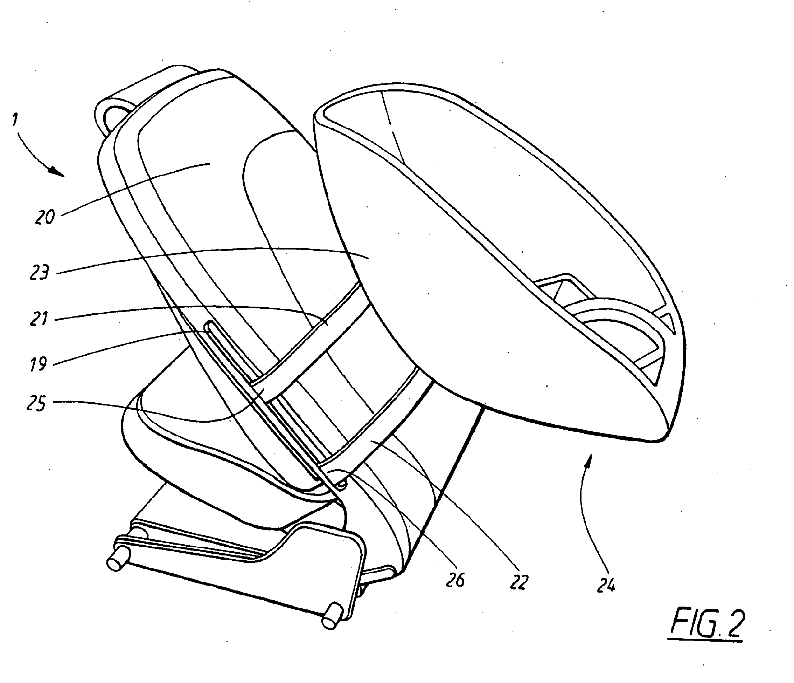

With reference to Figure 2, the seat 1 is now shown complete with upholstery and support material, comprising a complete seat back 20. In Figure 2, a central part of a first fastening rib 21 and a second fastening rib 22 is attached to the back 23 of a child seat 24 in such a way that the ribs 21, 22 extend across said back 23 of the child seat 24. Although not shown in detail in Figure 2, the ribs 21, 22 can be provided with bent end portions, or with hooks, catches or other suitable projections, which consequently cooperate with the guide tracks 18, 19 in the seat back 20. The ribs are preferably made from relatively stiff plastic material, but can also be made of other materials. Consequently, the ribs 21, 22 define fastening means in the form of relatively thin strips which extend across the rear side of the seat back 20 when mounted, i.e. the ribs 21, 22 are mounted to the rear side of the child seat 24 and are also designed so as to extend to the sides of the seat back 20 and cooperate with the above-mentioned guide tracks 18, 19 on the sides of the seat back 20. In this manner, the child seat 24 can be mounted to the seat back 20 in a secure manner. Preferably, as will be shown below, the ribs 21, 22 are suitably mounted in the guide tracks 18, 19 by means of a snap-in attachment.

In Fig. 2, the vehicle seat 1 is shown with such a perspective view that only the second guide track 19 with those rib edges 25, 26 that co-operate with this guide track 19 are shown. Of course, the same arrangement is provided at the other obscured side with the first guide track 18.

As is evident from Figure 2, the child seat 24 is attached to the complete seat back 20 by means of the ribs 21, 22 where the end parts 25, 26 of each rib 21, 22 engage the respective guide track 18, 19. In order to support the child seat 24 in an optimum manner, the seat back 20 may be bent slightly forward, as shown on Figure 2, if it is possible.

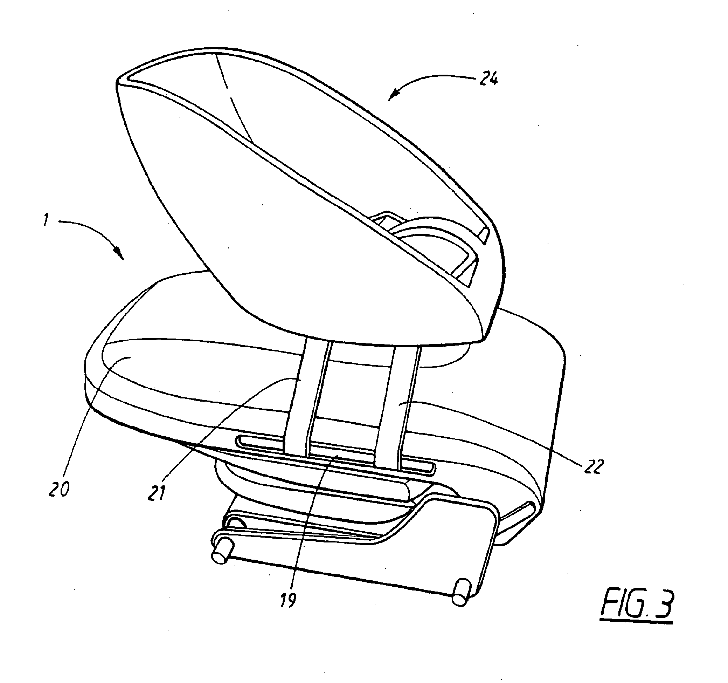

With reference to Figure 3, a flexible seat 1 where the seat back 20 is folded forward to a large extent is shown. Here, the child seat 24 is arranged on top of the bent seat back 20. This is suitable both for an upright position and a sleeping position for very small babies. In this position, the ribs 21, 22 may slide, preferably in a suitably dampened and energy-absorbing manner, in the guide tracks 18, 19 if a sudden deceleration such as a collision should occur. In this way, the seat back guide tracks 18, 19 are used to absorb energy during a collision, relieving the child of some of the impact forces.

This is an advantage which improves the safety for an occupant travelling in the child seat.

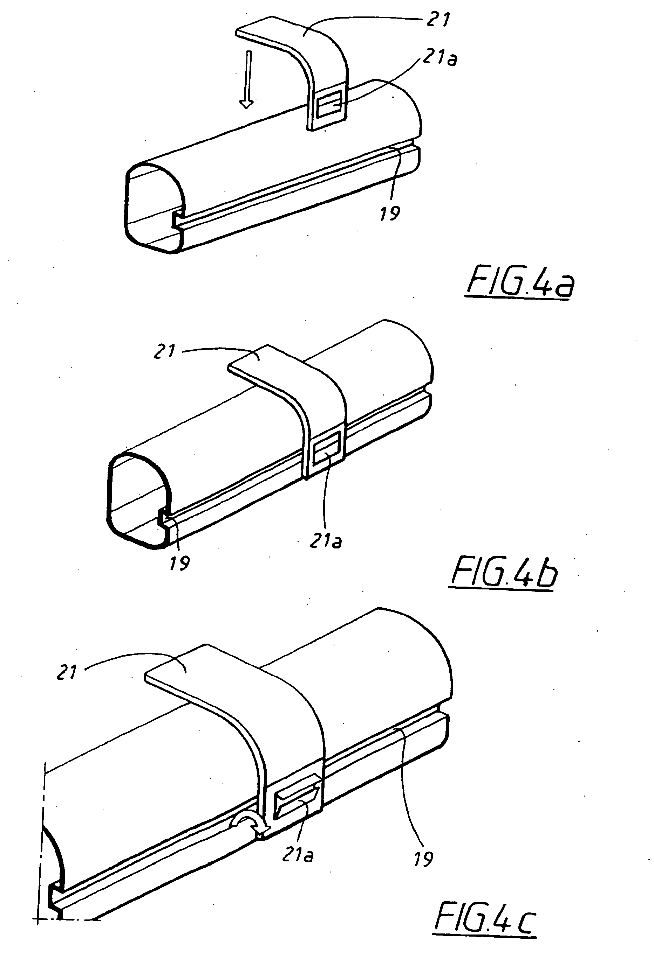

With reference to Figs. 4a-c, the mounting of a fastening rib 21 in a guide track 19 is shown in detail. As indicated in Figs. 4a and 4b, the rib 21 is pushed into place from the rear side of the seat back (not shown in Figs. 4a-c). The bent end section of the rib 21 comprises a snap-in member 21 a, preferably in the form of a spring-biased head or lip which snaps into the guide track 19 when mounted in a manner as shown in particular in Fig. 4b. Preferably, the snap-in member 21 a is arranged so that, when mounted, a certain portion thereof extends out of the bent end section 21 (as shown in Fig. 4c), which means that it can be unlocked by pushing on said snap-in member 21 a. Preferably, each fastening rib comprises two such snap-in member, i.e. one in each end, for mounting in both guide tracks 18, 19 (cf. Figs. 1-3). This means that when the invention is used for mounting a child seat, said child seat can only be unlocked by simultaneously pushing on both snap-in members. This means that there is little or no risk for unlocking the child seat by accident. Also, the snap-in member 21 a can be arranged to cooperate with the guide track 19 so that energy is absorbed during sliding of the rib 21 along the rear of the seat back.

The child seat 24 is easily detachable and attachable, which is an advantage if the child seat has to be brought away from the vehicle, for example if the child is sleeping.

The child seat 24 may be substituted for any other form of equipment that may be fastened to ribs as shown in the embodiment above. This equipment comprises load carriers and office kits (not shown), which then is safely secured in the vehicle.

The invention is not limited to what has been disclosed in the description, but may vary within the scope of the appended claims. For example, other types of equipment are conceivable than those mentioned for mounting on a vehicle seat, for example tables, electronic equipment, computer displays, load carriers etc. Also, the tracks according to the invention can be designed in the form of recessed grooves (as shown in the appended drawings) or, alternatively, in the form of other types of tracks such as bars, trails, mounting racks, rails or other suitable components for fastening of further components generally on the rear side of the vehicle seat in question, and for displacement of said components along the rear side of the seat back. The tracks may extend either along a generally straight line, or may be arranged as curved lines which are positioned in a suitable manner on the vehicle seat in question.

Further, the fastening ribs 21, 22 may have different shapes and may be connected to the guide tracks in many ways, conceivable for the skilled person. It may also be sufficient to use one or several fastening ribs.

## Claims

1. Vehicle seat comprising a seat back component (2) having a frame component (5) extending at least partly along the sides of said seat back component (2) and a first track (18) and a second track (19) arranged along each side of the frame component (5), said tracks (18, 19) being adapted for mounting of further components (24), to be positioned generally on the rear side of said seat back component (2), and each of said tracks (18, 19) being adapted to cooperate with at least one fastening rib (21, 22) being used for mounting of said further components (24), **characterized in that** the tracks (18, 19) are arranged to absorb energy when the ribs (21, 22) slide in the tracks (18, 19).

2. Vehicle seat according to claim 1, **characterized in that** said frame component (5) extends in a generally inverted U-shaped configuration along the peripheral sides of said seat back component (2), with a first shank (15) and a second shank (16) which are generally vertical and parallel to each other, and which are joined by a third shank (17).

3. Vehicle seat according to claim 1 or 2, **characterized in that** the tracks (18,19) extend along a length that approximately correspond to half the height of the seat back component (2).

4. Vehicle seat according to any one of the preceding claims, **characterized in that** it is equipped with a further component (24) in the form of a.child seat (24) being mounted by means of said at least one fastening rib (21, 22) cooperating with said tracks (18, 19), said fastening rib (21, 22) being arranged to be attached to the back (23) of said child seat (24), enabling the child seat (24) to be fastened to the seat back component (20) as the ends of each rib (21, 22) engage the respective track (18,19).

5. Child seat (24) being arranged for mounting in a detachable manner in a vehicle seat (1), said child seat (24) comprising fastening means (21, 22) arranged to extend, when mounted, towards the sides of a seat back component (2) of said vehicle seat (1) , thereby avowing said child seat (24) to be positioned generally on the rear side of said seat back component (2), **characterized in that** said fastening means are adapted for cooperating with tracks (18, 19) arranged along each side of said seat back component (2) and **in that** said fastening means (21, 22) are constituted by at least one fastening rib (21, 22) being used for mounting of said child seat (24) and being adapted to cooperate with each of said tracks (18, 19) whereby the tracks (18, 19) are arranged to absorb energy when the fastening means (21, 22) slide in the tracks (18, 19).

6. Child seat (24) according to claim 5, **characterized in that** said fastening means (21,22) comprises spring-biased snap-in components (21a) for mounting into said tracks (18,19).

## Patentansprüche

1. Fahrzeugsitz, umfassend: eine Sitzrückenkomponente (2) mit einer sich zumindest teilweise entlang den Seiten der Sitzrückenkomponente (2) erstreckenden Rahmenkomponente (5) und einer ersten Schiene (18) und einer zweiten Schiene (19), die entlang jeder Seite der Rahmenkomponente (5) angeordnet sind, wobei die Schienen (18, 19) zum Montieren weiterer, im Allgemeinen an der Rückseite der Sitzrückenkomponente (2) zu positionierender Komponenten (24) eingerichtet sind, und jede der Schienen (18, 19) mit zumindest einer zum Montieren der weiteren Komponenten (24) verwendeten Befestigungsrippe (21, 22) zusammenwirken kann,
**dadurch gekennzeichnet, dass**
die Schienen (18, 19) Energie absorbieren können, wenn die Rippen (21, 22) in den Schienen (18, 19) gleiten.

2. Fahrzeugsitz gemäß Anspruch 1, **dadurch gekennzeichnet, dass** sich die Rahmenkomponente (5) in einer im Allgemeinen invertierten U-förmigen Gestalt entlang den Umfangsseiten der Sitzrückenkomponente (2) mit einem ersten Schenkel (15) und einem zweiten Schenkel (16) erstreckt, die im Allgemeinen vertikal und parallel zueinander sind, und die miteinander durch einen dritten Schenkel (17) verbunden sind.

3. Fahrzeugsitz gemäß Anspruch 1 oder 2, **dadurch gekennzeichnet, dass** sich die Schienen (18, 19) entlang einer ungefähr einer halben Höhe der Sitzrückenkomponente (2) entsprechenden Länge erstrecken.

4. Fahrzeugsitz gemäß einem der vorangegangenen Ansprüche, **dadurch gekennzeichnet, dass** er mit der weiteren Komponente (24) in der Gestalt eines Kindersitzes (24) ausgestattet ist, der mittels der zumindest einen, mit den Schienen (18, 19) zusammenwirkenden Befestigungsrippe (21, 22) montiert ist, wobei die Befestigungsrippe (21, 22) am Rückteil (23) des Kindersitzes (24) angebracht werden kann, wodurch der Kindersitz (24) an der Sitzrückenkomponente (20) befestigt werden kann, wenn die Enden jeder Rippe (21, 22) an der entsprechenden Schiene (18, 19) angreifen.

5. Kindersitz (24), der zum abnehmbaren Montieren in einem Fahrzeugsitz (1) eingerichtet ist, wobei der Kindersitz (24) Befestigungsmittel (21, 22) umfasst, die sich, wenn montiert, in Richtung der Seiten der Sitzrückenkomponente (2) des Fahrzeugsitzes (1) erstrecken können, wodurch der Kindersitz (24) im Allgemeinen an der Rückseite der Sitzrückenkomponente (2) positioniert werden kann,
**dadurch gekennzeichnet, dass**
die Befestigungsmittel mit den entlang jeder Seite der Sitzrückenkomponente (2) angeordneten Schienen (18, 19) zusammenwirken können, und **dadurch**, dass
die Befestigungsmittel (21, 22) durch zumindest eine Befestigungsrippe (21, 22) gebildet sind, die zum Montieren des Kindersitzes (24) verwendet wird und mit jeder der Schienen (18, 19) zusammenwirken kann, wodurch die Schienen (18, 19) Energie absorbieren können, wenn die Befestigungsmittel (21, 22) in den Schienen (18, 19) gleiten.

6. Kindersitz (24) gemäß Anspruch 5, **dadurch gekennzeichnet, dass** die Befestigungsmittel (21, 22) federgespannte Einschnapp-Komponenten (21a) zum Montieren in die Schienen (18, 19) umfassen.

## Revendications

1. Siège de véhicule comprenant un composant arrière (2) de siège comportant un composant (5) formant un cadre s'étendant au moins en partie le long des côtés dudit composant arrière (2) de siège et une première rainure (18) et une deuxième rainure (19) disposées le long des de chaque côté du composant (5) formant un cadre, lesdites rainures (18, 19) étant conçues pour le montage de composants supplémentaires (24) à positionner globalement sur le côté arrière dudit composant arrière (2) de siège, et chacune desdites rainures (18, 19) étant conçue pour coopérer avec au moins une barre (21, 22) de fixation qui sert à monter lesdits composants supplémentaires (24), **caractérisé en ce que** les rainures (18, 19) sont conçues pour absorber de l'énergie quand les barres (21, 22) glissent dans les rainures (18, 19).

2. Siège de véhicule selon la revendication 1, **caractérisé en ce que** ledit composant (5) formant un cadre s'étend suivant une configuration globalement inversée en forme de U le long des côtés périphériques dudit composant arrière (2) de siège, avec une première tige (15) et une deuxième tige (16) qui sont globalement verticales et parallèles l'une par rapport à l'autre, et que rejoint une troisième tige (17).

3. Siège de véhicule selon la revendication 1 ou 2, **caractérisé en ce que** les rainures (18, 19) s'étendent le long d'une longueur qui correspond à peu près à la moitié de la hauteur du composant arrière (2) de siège.

4. Siège de véhicule selon l'une quelconque des revendications précédentes, **caractérisé en ce qu'**il s'agit d'un équipement doté d'un composant supplémentaire (24) sous forme d'un siège (24) pour enfant monté grâce à au moins une barre (21, 22) coopérant avec lesdites rainures (18, 19), ladite barre (21, 22) de fixation étant conçue pour être attachée à l'arrière (23) dudit siège (24) pour enfant, ce qui permet la fixation du siège (24) pour enfant au composant arrière (20) de siège quand les extrémités de chaque barre (21, 22) viennent s'engager dans la rainure respective (18, 19).

5. Siège (24) pour enfant disposé pour être monté de manière détachable dans un siège (1) de véhicule, ledit siège (24) pour enfant comprenant des moyens (21, 22) de fixation conçus pour s'étendre, quand ils sont montés, vers les côtés d'un composant arrière (2) de siège dudit siège (1) de véhicule, ce qui permet le positionnement général dudit siège (24) pour enfant de véhicule du côté arrière dudit composant arrière (2) de siège, **caractérisé en ce que** lesdits moyens de fixation sont conçus pour coopérer avec des rainures (18, 19) disposées le long de chaque côté dudit composant arrière (2) de siège, et **en ce que** lesdits moyens (21, 22) de fixation sont constitués d'au moins une barre (21, 22) de fixation qu'on utilise pour le montage dudit siège (24) pour enfant, et sont conçus pour coopérer avec chacune des rainures (18, 19), et les rainures (18, 19) étant conçues pour absorber de l'énergie lorsque les moyens (21, 22) de fixation glissent dans les rainures (18, 19).

6. Siège (24) pour enfant selon la revendication 5, **caractérisé en ce que** ledit moyens (21, 22) de fixation comprend des composants (21a) de fixation rapide à ressorts permettant le montage dans lesdites rainures (18, 19).
